# EUROPEAN PATENT SPECIFICATION

(11) **EP 3 030 086 B1**
(45) Date of publication and mention of the grant of the patent: **08.11.2017**
(21) Application number: 14757986.6
(22) Date of filing: 08.08.2014
(51) Int. Cl.: A23D 9/00, A23D 9/007, A23D 9/06, C11B 3/00

(54) **FAT OR OIL COMPOSITION**
FETT- ODER ÖLZUSAMMENSETZUNG
COMPOSITION D'HUILE OU DE MATIÈRE GRASSE

(30) Priority: 09.08.2013 JP 2013166700
(43) Date of publication of application: 15.06.2016
(73) Proprietor: Kao Corporation, Chuo-ku Tokyo 103-8210 (JP)
(72) Inventor: HOMMA, Rika, Tokyo 131-8501 (JP)
(74) Representative: Hoffmann Eitle
(86) International application number: PCT/JP2014/071459
(87) International publication number: WO 2015/020236

(56) References cited:
- WO-A1-2012/165397
- US-B1- 8 258 330

## Description

### Field of the Invention

The present invention relates to a fat or oil composition useful for cooking.

### Background of the Invention

In recent years, the maintenance and enhancement of health and the prevention and treatment of diseases have drawn increasing interest, and hence many studies have been made on the physiological functions of fish oil and of eicosapentaenoic acid (C20:5, EPA) and docosahexaenoic acid (C22:6, DHA), which are constituent components of the fish oil. Specifically, there were reported an anti-atherogenic action, a cerebral function improving action, a visual function improving action, an anti-tumor action, an anti-inflammatory action, and the like (Non Patent Document 1) . In 2005, the Ministry of Health, Labour and Welfare established a recommended total EPA and DHA intake (adult) of 1 g/day, and use of a fat or oil rich in EPA and DHA has been desired.

However, the fat or oil rich in those highly-unsaturated fatty acids has very low oxidative stability and is liable to cause degradation odor and unpleasant odor. Accordingly, the practical use thereof is remarkably limited.

Therefore, there is sold a product obtained by diluting the fat or oil rich in EPA and DHA with a fat or oil not containing EPA and DHA to enhance oxidative stability thereof.

In general, before a fat or oil is used as an edible oil, the fat or oil is subjected to so-called deodorization process by which the fat or oil is brought into contact with steam under high temperature and reducedpressure to improve its taste and flavor. As the deodorization process for a fat or oil rich in EPA and DHA, there is known, for example, a method of preparing and stabilizing an edible oil extracted from the marine animal and vegetable, which includes treating an edible oil extracted from the marine animal and vegetable with silica in the presence or absence of carbon and performing vacuum steam deodorization at a temperature of from about 140°C to about 210°C in the presence of from 0.1 to 0.4% of a rosemary or sage extract (Patent Document 1).

There is also known a deodorization method for a fat or oil of an aquatic animal, which includes aerating a fat or oil of an aquatic animal with an oxygen-containing gas and subsequently subj ecting the fat or oil to steam distillation under reduced pressure (Patent Document 2).

WO 2012165397 (A1) describes a method for producing palm oil capable of suppressing the production of a 3-monochloropropane-1,2-diol fatty acid ester at a low cost. The method is characterized by comprising a step of removing free chlorine from squeezed oil after squeezing in an oil-squeezing step and/or crude palm oil before purification in a purification step. The step of removing free chlorine is a step of washing with water once or more.

US 8,258,330 discloses carrier fluid compositions and their use in processes for reducing the concentration of persistent organic pollutants, such as polychlorodibenzo-p-dioxins (PCDDs), polychlorodibenzo-p-furans (PCDDF), polychlorinated biphenyls (PCBs), polybrominated diphenyl ethers (PBDEs), polycyclic aromatic hydrocarbons (PAHs), and pesticides, such as chlorinated hydrocarbons, chlorinated toxaphenes and camphenes, in fish oil. The process includes vacuum distillation of the fish oil in the presence of the carrier fluid compositions to provide a fish oil residue having a reduced concentration of persistent organic pollutants.

WO 2011/002275 relates to a process of manufacturing palm oil fractions containing virtually no 3-monochloropropanediol fatty acid esters (3-MCPD-esters). The process comprises fractionating a crude palm oil having a free fatty acid content of less than 1.5% and a diglyceride content of less than 5.5 wt.% to produce at least one crude palm oil fraction, said crude palm oil fraction being selected from crude palm olein having an iodine value of at least 55 and crude palm stearin having an iodine value of less than 48; and deodorizing the crude palm oil fraction to produce a deodorized palm oil fraction having an 3-MCPD-ester content of less than 1 ppm. A method of preparing a food product is also described, said method comprising incorporating into said food product 3-99 wt.% of a palm oil fraction obtained by the aforementioned process.

### Patent Document

[Patent Document 1] JP-A-2000-144168
[Patent Document 2] JP-A-8-60177

### Non Patent Document

[Non Patent Document 1] "Journal of Japan Oil Chemists' Society," Vol. 48, p. 1017 (1999)

### Summary of the Invention

The present invention provides a fat or oil composition, comprising a fat or oil in which a total content of eicosapentaenoic acid and docosahexaenoic acid in total constituent fatty acids thereof is from 0.05 to 15 mass%, and having a content of 3-MCPDE of 0.7 ppm or less and a content of chlorine of 30 ppm or less.

### Detailed Description of the Invention

Even if a fat or oil composition that is excellent in initial taste and flavor can be produced by a conventional deodorization process or dilution, the taste and flavor are liable to degrade during storage. In particular, when the fat or oil composition is used for cooking after storage, the composition may have strong degradation odor or unpleasant odor.

Therefore, the present invention provides a fat or oil composition rich in eicosapentaenoic acid and docosahexaenoic acid while having high oxidative stability and suppressed degradation odor and unpleasant odor at the time of cooking even after storage.

The inventors of the present invention made various studies on the cause of the change in the taste and flavor of a fat or oil composition containing eicosapentaenoic acid and docosahexaenoic acid. As a result, the inventor found that high contents of 3-MCPDE and chlorine cause degradation of the taste and flavor of the fat or oil composition. Further, the inventor found that if the concentrations of 3-MCPDE and chlorine contained in the fat or oil composition is adjusted to specific concentrations, the degradation of the taste and flavor at the time of cooking can be suppressed even after storage.

According to the present invention, it is possible to produce a fat or oil composition rich in eicosapentaenoic acid and docosahexaenoic acid while producing a cooked food excellent in the taste and flavor because degradation of the taste and flavor at the time of cooking after storage is suppressed.

A fat or oil composition of the present invention comprises a fat or oil in which the total content of eicosapentaenoic acid and docosahexaenoic acid in total constituent fatty acids thereof is from 0.05 to 15 mass% (hereinafter simply referred to as "%"), and has a content of 3 -MCPDE of 0.7 ppm or less and a content of chlorine of 30 ppm or less.

In the fat or oil composition of the present invention, the kind of the fat or oil is not particularly limited, and any fat or oil may be used as long as it can be used as an edible fat or oil. In addition, the content of the fat or oil in the fat or oil composition is preferably from 90 to 99.95 mass% (hereinafter simply referred to as "%"), more preferably from 95 to 99.5%, from the viewpoint of the use thereof.

In the present invention, the total content of eicosapentaenoic acid and docosahexaenoic acid in the total constituent fatty acids of the fat or oil in the fat or oil composition is from 0.05 to 15%, preferably 0.1% or more, more preferably 0.3% or more, more preferably 1% or more, even more preferably 1.5% or more, from the viewpoint of physiological effects. In addition, the total content is preferably 12% or less, more preferably 9% or less, even more preferably 5% or less, from the viewpoint of oxidative stability. The total content of eicosapentaenoic acid and docosahexaenoic acid with respect to the total constituent fatty acids of the fat or oil is preferably from 0.1 to 15%, more preferably from 0.3 to 12%, more preferably from 1 to 9%, even more preferably from 1.5 to 5%, from the viewpoints of both physiological effects and oxidative stability. It should be noted that the amount of a fatty acid herein refers to an amount obtained by converting it to a free fatty acid.

The constituent fatty acids of the fat or oil in the fat or oil composition other than eicosapentaenoic acid and docosahexaenoic acid are not particularly limited, and may be any of saturated fatty acids and unsaturated fatty acids. The ratio of the unsaturated fatty acids in the constituent fatty acids of the fat or oil other than eicosapentaenoic acid and docosahexaenoic acid is preferably from 60 to 100%, more preferably from 70 to 100%, more preferably from 75 to 100%, even more preferably from 80 to 98%, from the viewpoints of the appearance and industrial productivity of the fat or oil. The unsaturated fatty acids have preferably 14 to 24 carbon atoms, more preferably 16 to 22 carbon atoms, from the viewpoint of physiological effects.

In addition, the content of the saturated fatty acids in the total constituent fatty acids of the fat or oil in the fat or oil composition is preferably 40% or less, more preferably 30% or less, more preferably 25% or less, even more preferably 20% or less. Further, the content is preferably 0.5% or more from the viewpoint of industrialproductivityof the fat oroil. The saturated fatty acids have preferably 14 to 24 carbon atoms, more preferably 16 to 22 carbon atoms.

In the present invention, substances that constitute the fat or oil in the fat or oil composition contain not only a triacylglycerol but also a monoacylglycerol and a diacylglycerol. That is, the fat or oil in the present invention contains any one or more of a monoacylglycerol, a diacylglycerol, and a triacylglycerol.

The content of the triacylglycerol in the fat or oil is preferably 15% or more, more preferably 50% or more, more preferably 75% or more, more preferably 78% or more, more preferably 88% or more, more preferably 90% or more, even more preferably 92% or more, and is preferably 100% or less, more preferably 99.5% or less, even more preferably 99% or less, from the viewpoint of industrial productivity of the fat or oil.

In addition, the content of the diacylglycerol in the fat or oil may be 0, but is preferably 0.1% or more, more preferably 0.2% or more and is preferably 85% or less, more preferably 50% or less, more preferably 25% or less, more preferably 19% or less, more preferably 9% or less, morepreferably 7% or less, evenmorepreferably 5% or less, from the viewpoint of improving the taste and flavor.

Further, the content of the monoacylglycerol in the fat or oil is preferably 3% or less, more preferably from 0 to 2%, from the viewpoint of improving the taste and flavor.

In addition, the content of a free fatty acid or a salt thereof contained in the fat or oil composition of the present invention is preferably 5% or less, more preferably from 0 to 2%, even more preferably from 0 to 1%, from the viewpoints of the taste and flavor and industrial productivity of the fat or oil.

The content of 3-MCPDE in the fat or oil composition of the present invention is 0.7 ppm or less. When the fat or oil composition contains 3-MCPDE at such concentration, degradation of the taste and flavor can be suppressed even if the fat or oil composition is used for cooking after storage.

3-MCPDE is an ester obtained by ester linkage of 3 -monochloropropanediol with one or two fatty acids, and is contained in the fat or oil at a minute amount.

3-MCPDE in the fat or oil composition can be measured by a method described in the German Society for Fat Science (hereinafter sometimes referred to as "DGF") standard method C-VI 18(10) (DGF Standard Methods 2010 (16. Supplement), C-VI 18(10), "Fatty-acid-bound 3-chloropropane-1,2-diol (3-MCPD) and 2,3-epoxi-propane-1-ol (glycidol)"). In the present invention, a value determined by the standard method, i.e. , the method of assay B is defined as the content of 3-MCPDE. Details of the measurement method are described in Examples.

The content of 3-MCPDE in the fat or oil composition of the present invention is 0.7 ppm or less. The content is preferably 0.6 ppm or less, more preferably 0.55 ppm or less, more preferably 0.4 ppm or less, even more preferably 0.3 ppm or less, from the viewpoint of suppressing degradation of the taste and flavor at the time of cooking after storage. The content of 3-MCPDE is preferably as low as possible, and hence the lower limit is preferably 0 ppm. From the viewpoint of labor of purification, the content is preferably 0.01 ppm or more, more preferably 0.1 ppm or more because such concentration of 3-MCPDE has a small effect on degradation of the taste and flavor at the time of cooking after storage.

In addition, in the fat or oil composition of the present invention, the mass ratio of the content of 3-MCPDE in the fat or oil composition to the total content, in the fat or oil composition, of eicosapentaenoic acid and docosahexaenoic acid in the total constituent fatty acids of the fat or oil, [3-MCPDE/ (C20 : 5+C22 :6)], is preferably 0.3×10⁻⁴ or less, more preferably 0.25×10⁻⁴ or less, even more preferably 0.2×10⁻⁴ or less, from the viewpoint of suppressing degradation of the taste and flavor at the time of cooking after storage.

In addition, the content of chlorine in the fat or oil composition of the present invention is 30 ppm or less. When the fat or oil composition contains chlorine at such concentration, degradation of the taste and flavor can be suppressed even if the fat or oil composition is used for cooking after storage. Details of a measurement method for chlorine in the fat or oil composition are described in Examples.

The content of chlorine in the fat or oil composition of the present invention is preferably 20 ppm or less, more preferably 15 ppm or less, more preferably 10 ppm or less, more preferably 7 ppm or less, even more preferably 5 ppm or less, from the viewpoint of suppressing degradation of the taste and flavor at the time of cooking after storage. The content of chlorine is preferably as low as possible, and hence the lower limit is preferably 0 ppm.

The fat or oil composition of the present invention can be obtained by, for example, purification treatment, preferably deodorization treatment under a low heat history (mild) condition, using the concentrations of 3-MCPDE and chlorine as indicators. Further, in order to efficiently adjust the contents of 3-MCPDE and chlorine in the fat or oil composition to the above-mentioned ranges, one or two or more of fats or oils poor in 3-MCPDE and chlorine may be used as sources of the fat or oil to prepare the fat or oil composition.

The edible fat or oil that can be used as a source of the fat or oil in the fat or oil composition of the present invention is not particularly limited, and is preferably a fat or oil rich in eicosapentaenoic acid and docosahexaenoic acid, more preferably a fat or oil in which the total content of eicosapentaenoic acid and docosahexaenoic acid in constituent fatty acids of the fat or oil is preferably 5% or more, more preferably 10% or more, more preferably 15% or more, even more preferably 20% or more. Such fat or oil is preferably one or two or more of fats or oils selected from the group consisting of fish oil and algal oil.

It was found that, when a fat or oil is rich in eicosapentaenoic acid and docosahexaenoic acid serving as constituent fatty acids, the concentrations of 3-MCPDE and chlorine are liable to increase. Therefore, the one or two or more of fats or oils selected from the group consisting of fish oil and algal oil are preferably fats or oils poor in 3-MCPDE and chlorine. Further, the content of 3-MCPDE in the one or two or more of fats or oils selected from the group consisting of fish oil and algal oil is preferably 4 ppm or less, more preferably 3 ppm or less, more preferably 2 ppm or less, even more preferably 1 ppm or less.

In addition, the content of chlorine in the one or two or more of fats or oils selected from the group consisting of fish oil and algal oil is preferably 90 ppm or less, more preferably 70 ppm or less, more preferably 60 ppm or less, more preferably 50 ppm or less, more preferably 30 ppm or less, more preferably 20 ppm or less, even more preferably 10 ppm or less.

In addition, in order to adjust the concentrations of eicosapentaenoic acid and docosahexaenoic acid in the fat or oil, an edible fat or oil poor in eicosapentaenoic acid and docosahexaenoic acid is preferably used as a source of the fat or oil. Further, the edible fat or oil is preferably a fat or oil substantially free from eicosapentaenoic acid and docosahexaenoic acid, and specifically, is preferably a fat or oil containing eicosapentaenoic acid and docosahexaenoic acid at a total content of 1% or less in constituent fatty acids of the fat or oil. Examples of such edible fat or oil may include: plant-derived fats or oils such as soybean oil, rapeseed oil, safflower oil, rice oil, corn oil, sunflower oil, cotton seed oil, olive oil, sesame oil, peanut oil, Job's tears seed oil, wheat germ oil, Japanese basil oil, linseed oil, perilla oil, sacha inchi oil, walnut oil, kiwi seed oil, salvia seed oil, grape seed oil, macadamia nut oil, hazelnut oil, pumpkin seed oil, camellia oil, tea seed oil, borage oil, palm oil, palm olein, palm stearin, coconut oil, palm kernel oil, cacao butter, sal butter, and shea butter; animal-derived fats or oils such as lard, beef tallow, and butter fat; and fats or oils such as transesterified oils, hydrogenated oils, and fractionated oils thereof. Those oils may each be used alone, or may be used as a mixture as appropriate. Of those, a liquid fat or oil excellent in low temperature resistance is preferably used from the viewpoint of usability. Further, from the viewpoint of low content of 3-MCPDE, a plant seed oil is more preferred, soybean oil, rapeseed oil, safflower oil, corn oil, sunflower oil, cotton seed oil, olive oil, sesami oil, peanut oil, Job's tears seed oil, wheat germ oil, Japanese basil oil, linseed oil, or perilla oil is more preferred, and soybean oil or rapeseed oil is even more preferred.

It should be noted that the liquid fat or oil refers to a fat or oil that stays liquid at 20°C, when determined in accordance with a cold test described in Standard Methods for the Analysis of Fats, Oils andRelatedMaterials 2.3.8-27. Inaddition, the edible fat or oil is preferably a refined fat or oil obtained by a refinement step.

In the present invention, a mixing ratio of the one or two or more of fats or oils selected from the group consisting of fish oil and algal oil to the other edible fat or oil poor in eicosapentaenoic acid and docosahexaenoic acid may be appropriately adjusted depending on the kinds of the fats or oils, and the ratio of the fat or oil selected from the group consisting of fish oil and algal oil is preferably 1% or more, more preferably 2% or more, even more preferably 3% or more and is preferably 75% or less, more preferably 50% or less, more preferably 20% or less, even more preferably 10% or less with respect to the total of the former and latter.

The fat or oil composition of the present invention may further contain a rosemary extract from the viewpoint of oxidative stability. The rosemary extract refers to an extract of rosemary (Japanese name: Mannenrou) *(Rosmarinus officinalis* L.) belonging to the genus *Rosmarinus* of the family Lamiaceae.

The content of the rosemary extract in the fat or oil composition is preferably from 0.001 to 0.18%, and is preferably 0.002% or more, more preferably 0.004% or more, more preferably 0.008% or more, more preferably 0.016% or more, even more preferably 0.04% or more, from the viewpoint of oxidative stability. Inaddition, the content of the rosemary extract is preferably 0.16% or less, more preferably 0.14% or less, even more preferably 0.1% or less, from the viewpoint of the taste and flavor. The content of the rosemary extract in the fat or oil composition is preferably from 0.002 to 0.18%, more preferably from 0.004 to 0.16%, more preferably from 0.008 to 0.14%, more preferably from 0.016 to 0.1%, even more preferably from 0.04 to 0.1%, from the viewpoints of both the oxidative stability and the taste and flavor.

In addition, the fat or oil composition of the present invention may contain one or two or more selected from a basil extract, a thyme extract, and a dill extract. The basil extract is an extract of basil *(Ocimum basilicum* L.) belonging to the genus *Perilla,* the thyme extract is an extract of thyme (another name: thyme) *(Thymus vulgaris* L.) belonging to the genus *Perilla,* and the dill extract is an extract of dill (*Anethum graveolens* L.) belonging to the genus *Anethum.*

The content of the basil extract in the fat or oil composition is preferably from 0.00001 to 0.0025%, and is more preferably 0.00002% or more, more preferably 0.00005% or more, even more preferably 0.0001% or more, from the viewpoint of suppressing degradation odor due to oxidation and fishy odor. In addition, the content is preferably 0.002% or less, more preferably 0.0018% or less, more preferably 0.0015% or less, more preferably 0.0012% or less, more preferably 0.0009% or less, more preferably 0.0008% or less, even more preferably 0.0007% or less, from the viewpoint of the taste and flavor.

In addition, the content of the thyme extract in the fat or oil composition is preferably from 0.00001 to 0.0025%, and is more preferably 0.00002% or more, more preferably 0.00005% or more, even more preferably 0.0001% or more, from the viewpoint of suppressing degradation odor due to oxidation and fishy odor. In addition, the content is preferably 0.002% or less, more preferably 0.0018% or less, more preferably 0.0015% or less, more preferably 0.0012% or less, more preferably 0.0009% or less, more preferably 0.0008% or less, even more preferably 0.0007% or less, from the viewpoint of the taste and flavor.

In addition, the content of the dill extract in the fat or oil composition is preferably 0.00002% or more, more preferably 0.00004% or more, more preferably 0.0001% or more, more preferably 0.0002% or more, more preferably 0.0004% or more, more preferably 0.0005% or more, even more preferably 0.001% or more, from the viewpoint of suppressing degradation odor due to oxidation and fishy odor. In addition, the content is preferably 0.05% or less, more preferably 0.02% or less, even more preferably 0.01% or less, from the viewpoint of the taste and flavor.

It should be noted that the rosemary extract, basil extract, thyme extract, and dill extract in the present invention each may have a form with a purity of about 100% or a form obtained by extraction or dilution with a solvent. The content of such extract is determined based on the mass of a pure substance containing no solvent.

The fat or oil composition of the present invention further contains preferably from 0.01 to 0.2%, more preferably from 0.02 to 0.1% of an antioxidant other than the rosemary extract, basil extract, thyme extract, and dill extract in the fat or oil composition from the viewpoint of oxidative stability at the time of storage and cooking.

Examples of the antioxidant include a natural antioxidant, tocopherol, an ascorbic acid ester, and lecithin, or the like. Of those, one or two or more of antioxidants selected from the group consisting of a natural antioxidant, tocopherol, ascorbyl palmitate, and lecithin are preferred, and ascorbyl palmitate and lecithin are more preferably used in combination.

The fat or oil composition of the present invention can be used in the same manner as a general edible fat or oil, and can be widely applied to a variety of foods and beverages each using a fat or oil. In particular, the fat or oil composition is used suitably as a fat or oil for cooking, more suitably as a fat or oil for cooking of a deep-fried food such as fry or tempura, a sauteed food, or a grilled food.

In relation to the above-mentioned embodiment, the present invention discloses the following fat or oil composition or use.
<1> A fat or oil composition, comprising a fat or oil in which a total content of eicosapentaenoic acid and docosahexaenoic acid in total constituent fatty acids thereof is from 0.05 to 15 mass%, and having a content of 3-MCPDE of 0.7 ppm or less and a content of chlorine of 30 ppm or less.
<2> The fat or oil composition according to Item <1>, in which the total content of eicosapentaenoic acid and docosahexaenoic acid in the total constituent fatty acids of the fat or oil is preferably 0.1% or more, more preferably 0.3% or more, more preferably 1% or more, even more preferably 1.5% or more, is preferably 12% or less, more preferably 9% or less, even more preferably 5% or less, and is preferably from 0.1 to 15%, more preferably from 0.3 to 12%, more preferably from 1 to 9%, even more preferably from 1.5 to 5%.
<3> The fat or oil composition according to Item <1> or <2>, in which unsaturated fatty acids account for preferably from 60 to 100%, more preferably from 70 to 100%, more preferably from 75 to 100%, even more preferably from 80 to 98% of the constituent fatty acids of the fat or oil other than eicosapentaenoic acid and docosahexaenoic acid.
<4> The fat or oil composition according to Item <3>, in which the unsaturated fatty acids have preferably 14 to 24 carbon atoms, more preferably 16 to 22 carbon atoms.
<5> The fat or oil composition according to any one of Items <1> to <4>, in which the content of saturated fatty acids in the total constituent fatty acids of the fat or oil is preferably 40% or less, more preferably 30% or less, more preferably 25% or less, even more preferably 20% or less, and is preferably 0.5% or more.
<6> The fat or oil composition according to Item <5>, in which the saturated fatty acids have preferably 14 to 24 carbon atoms, more preferably 16 to 22 carbon atoms.
<7> The fat or oil composition according to any one of Items <1> to <6>, in which the content of a triacylglycerol in the fat or oil is preferably 15% or more, more preferably 50% or more, more preferably 75% or more, more preferably 78% or more, more preferably 88% or more, more preferably 90% or more, even more preferably 92% or more, and is preferably 100% or less, more preferably 99.5% or less, even more preferably 99% or less.
<8> The fat or oil composition according to any one of Items <1> to <7>, in which the content of a diacylglycerol in the fat or oil is preferably 0%, more preferably 0.1% or more, even more preferably 0.2% or more, and is preferably 85% or less, more preferably 50% or less, more preferably 25% or less, more preferably 19% or less, more preferably 9% or less, more preferably 7% or less, even more preferably 5% or less.
<9> The fat or oil composition according to any one of Items <1> to <8>, in which the content of a monoacylglycerol is preferably 3% or less, more preferably from 0 to 2%.
<10> The fat or oil composition according to any one of Items <1> to <9>, in which the content of a free fatty acid or a salt thereof in the fat or oil composition is preferably 5% or less, more preferably from 0 to 2%, even more preferably from 0 to 1%.
<11> The fat or oil composition according to any one of Items <1> to <10>, in which the content of 3-MCPDE in the fat or oil composition is preferably 0.6 ppm or less, more preferably 0.55 ppm or less, more preferably 0.4 ppm or less, even more preferably 0.3 ppm or less, and is preferably 0 ppm, more preferably 0.01 ppm or more, even more preferably 0.1 ppm or more.
<12> The fat or oil composition according to any one of Items <1> to <11>, in which the mass ratio of the content of 3-MCPDE in the fat or oil composition to the total content, in the fat or oil composition, of eicosapentaenoic acid and docosahexaenoic acid in the total constituent fatty acids of the fat or oil, [3-MCPDE/(C20:5+C22:6)], is preferably 0.3×10⁻⁴ or less, more preferably 0.25×10⁻⁴ or less, even more preferably 0.2×10⁻⁴ or less.
<13> The fat or oil composition according to any one of Items <1> to <12>, in which the content of chlorine in the fat or oil composition is preferably 20 ppm or less, more preferably 15 ppm or less, more preferably 10 ppm or less, more preferably 7 ppm or less, even more preferably 5 ppm or less, and the lower limit thereof is preferably 0 ppm.
<14> The fat or oil composition according to any one of Items <1> to <13>, in which an edible fat or oil that can be used as a source of the fat or oil is preferably a fat or oil rich in eicosapentaenoic acid and docosahexaenoic acid, more preferably a fat or oil containing eicosapentaenoic acid and docosahexaenoic acid at a total content of preferably 5% or more, more preferably 10% or more, more preferably 15% or more, even more preferably 20% or more in constituent fatty acids of the fat or oil.
<15> The fat or oil composition according to Item <14>, in which the fat or oil is preferably one or two or more of fats or oils selected from the group consisting of fish oil and algal oil.
<16> The fat or oil composition according to Item <15>, in which the content of 3-MCPDE in the one or two or more of fats or oils selected from the group consisting of fish oil and algal oil is preferably 4 ppm or less, more preferably 3 ppm or less, more preferably 2 ppm or less, even more preferably 1 ppm or less.
<17> The fat or oil composition according to Item <15> or <16>, in which the content of chlorine in the one or two or more of fats or oils selected from the group consisting of fish oil and algal oil is preferably 90 ppm or less, more preferably 70 ppm or less, more preferably 60 ppm or less, more preferably 50 ppm or less, more preferably 30 ppm or less, more preferably 20 ppm or less, even more preferably 10 ppm or less.
<18> The fat or oil composition according to any one of Items <1> to <17>, in which the fat or oil composition comprises, as an edible fat or oil that can be used as a source of the fat or oil, preferably a fat or oil substantially free from eicosapentaenoic acid and docosahexaenoic acid, more preferably a fat or oil containing eicosapentaenoic acid and docosahexaenoic acid at a total content of 1% or less in constituent fatty acids of the fat or oil.
<19> The fat or oil composition according to any one of Items <15> to <18>, in which a mixing ratio of the one or two or more of fats or oils selected from the group consisting of fish oil and algal oil to the other edible fat or oil poor in eicosapentaenoic acid and docosahexaenoic acid is adjusted so that the ratio of the fats or oils selected from the group consisting of fish oil and algal oil is preferably 1% or more, more preferably 2% or more, even more preferably 3% or more and is preferably 75% or less, more preferably 50% or less, more preferably 20% or less, even more preferably 10% or less, with respect to the total of the former and the latter.
<20> The fat or oil composition according to any one of Items <1> to <19>, further comprising a rosemary extract
<21> The fat or oil composition according to Item <20>, in which the content of the rosemary extract is preferably 0.001% or more, more preferably 0.002% or more, more preferably 0.004% or more, more preferably 0.008% or more, more preferably 0.016% or more, even more preferably 0.04% or more, is preferably 0.18% or less, more preferably 0.16% or less, more preferably 0.14% or less, even more preferably 0.1% or less, and is preferably from 0.002 to 0.18%, more preferably from 0.004 to 0.16%, more preferably from 0.008 to 0.14%, more preferably from 0.016 to 0.1%, even more preferably from 0.04 to 0.1%.
<22> The fat or oil composition according to any one of Items <1> to <21>, further comprising one or two or more selected from a basil extract, a thyme extract, and a dill extract.
<23> The fat or oil composition according to Item <22>, in which the content of the basil extract is preferably 0.00001% or more, more preferably 0.00002% or more, more preferably 0.00005% or more, even more preferably 0.0001% or more, and is preferably 0.0025% or less, more preferably 0.002% or less, more preferably 0.0018% or less, more preferably 0.0015% or less, more preferably 0.0012% or less, more preferably 0.0009% or less, more preferably 0.0008% or less, even more preferably 0.0007% or less.
<24> The fat or oil composition according to Item <22> or <23>, in which the content of the thyme extract is preferably 0.00001% or more, more preferably 0.00002% or more, more preferably 0.00005% or more, even more preferably 0.0001% or more, and is preferably 0.0025% or less, more preferably 0.002% or less, more preferably 0.0018% or less, more preferably 0.0015% or less, more preferably 0.0012% or less, more preferably 0.0009% or less, more preferably 0.0008% or less, even more preferably 0.0007% or less.
<25> The fat or oil composition according to any one of Items <22> to <24>, in which the content of the dill extract is preferably 0.00002% or more, more preferably 0.00004% or more, more preferably 0.0001% or more, more preferably 0.0002% or more, more preferably 0.0004% or more, more preferably 0.0005% ormore, even more preferably 0.001% or more, and is preferably 0.05% or less, more preferably 0.02% or less, even more preferably 0.01% or less.
<26> The fat or oil composition according to any one of Items <1> to <25>, further comprising preferably from 0.01 to 0.2%, more preferably from 0.02 to 0.1% of an antioxidant other than a rosemary extract, a basil extract, a thyme extract, and a dill extract.
<27> The fat or oil composition according to Item <26>, in which the antioxidant is preferably one or two or more selected from the group consisting of a natural antioxidant, tocopherol, an ascorbic acid ester, and lecithin, more preferably one or two or more selected from the group consisting of a natural antioxidant, tocopherol, ascorbyl palmitate, and lecithin, even more preferably ascorbyl palmitate and lecithin in combination.

### Examples

### (Analysis methods)

### (1) Composition of glycerides in fat or oil

About 10 mg of a fat or oil sample and 0.5 mL of a trimethylsilylating agent ("Silylating agent TH," manufactured by Kanto Chemical Co., Inc.) were placed in a glass sample bottle, and the bottle was sealed and heated at 70°C for 15 minutes. 1.0 mL of water and 1.5 mL of hexane were added thereto, and the bottle was shaken. The bottle was allowed to stand still, and then the upper layer was analyzed by gas-liquid chromatography (GLC).

### <GLC analysis conditions>

### (Conditions)

Apparatus: Agilent 6890 Series (manufactured by Agilent Technologies)
Integrator: ChemStation B.02.01 SR2 (manufactured by Agilent Technologies)
Column: DB-1ht (manufactured by Agilent J&W)
Carrier gas: 1.0 mL He/min
Injector: Split (1:50), T=320°C
Detector: FID, T=350°C
Oven temperature: The temperature was raised from 80 °C at 10 °C/min to 340°C, and kept for 15 minutes.

### (2) Composition of constituent fatty acids of fat or oil

Fatty acid methyl esters were prepared in accordance with "Preparation method for fatty acid methyl ester (2.4.1.-1996)" described in "Standard Methods for the Analysis of Fats, Oils and Related Materials" edited by Japan Oil Chemists Society, and the resultant fat or oil samples were subjected to measurement in accordance with American Oil Chemists. Society Official Method Ce 1f-96 (GLC method).

### <GLC analysis conditions>

Column: CP-SIL88 50 m×0.25 mm×0.2 µm (VARIAN)
Carrier gas: 1.0 mL He/min
Injector: Split (1:40), T=300°C
Detector: FID, T=300°C
Oven temperature: The temperature was kept at 150°C for 5 minutes, raised to 170°C at 1°C/min, raised to 200°C at 1°C/min, raised to 220°C at 20°C/min, and kept for 5 minutes.

### (3) Measurement of 3-MCPDE (in accordance with German Society for Fat Science (DGF) standard method C-VI 18(10) assay B)

About 100 mg of each of the fat or oil samples was weighed in a test tube with a lid, and 100 µL of an internal standard (3-MCPD-d5-dipalmitate/t-butyl methyl ether), 100 µL of t-butyl methyl ether, and 200 µL of 0.5 N sodium methoxide were added thereto. The mixture was stirred and then allowed to stand still for 5 minutes. 600 µL of isohexane and 600 µL of an aqueous solution of 0.85% sulfuric acid/60% sodium bromide were added thereto, and the mixture was stirred, followed by removal of the upper layer. Further, 600 µL of isohexane were added thereto, and the mixture was stirred, followed by removal of the upper layer. 100 µL of a saturated phenylboronic acid/diethyl ether solution was added to an extract solution obtained by repeating extraction from the lower layer three times with 600 µL of a mixed solution of diethyl ether/ethyl acetate (volume ratio 3:2), and the resultant mixture was stirred. The organic solvents were distilled off under a nitrogen stream, and 500 µL of isooctane was added to the residue. The mixture was stirred and subjected to a gas chromatograph-mass spectrometer (GC-MS) to determine the amount of 3-MCPDE.

### (4) Measurement of chlorine

A sample was weighed in a sample board made of quartz, and decomposed by burning at 900°C (preset temperature of a furnace) in an Ar/O₂ stream. Gas generated was absorbed in an absorption solution to ionize elements of interest, and the volume of the solution was adjusted with pure water. The Cl ion in the test solution was quantified by an ion chromatograph method. The concentration of Cl in the sample was defined to be the same as the concentration of the Cl ion.

### <Measurement apparatus and condition>

Measurement apparatus: ICS-1600 (Dionex)
Column: IonPac AS12A (Dionex)

### (Raw materials)

Fats or oils a to g having each composition shown in Table 1 were used as fish oils or algal oils, fats or oils 1 and 2 having each composition shown in Table 1 were used as rapeseed oils, and a fat or oil 3 having a composition shown in Table 1 was used as palm oil.

**[Table 1]**

| | | Fat or oil a | Fat or oil b | Fat or oil c | Fat or oil d | Fat or oil e | Fat or oil f | Fat or oil g | Fat or oil 1 | Fat or oil 2 | Fat or oil 3 |
|---|---|---|---|---|---|---|---|---|---|---|---|
| Glyceride composition (%) | MAG | 0.00 | 0.00 | 0.00 | 0.00 | 0.49 | 0.00 | 0.00 | 0.24 | 0.09 | 0.00 |
| | DAG | 1.68 | 0.53 | 0.59 | 0.40 | 0.69 | 2.13 | 0.00 | 1.16 | 2.32 | 4.91 |
| | TAG | 98.23 | 99.38 | 99.38 | 99.57 | 98.57 | 97.85 | 99.97 | 98.56 | 97.55 | 95.04 |
| | FFA | 0.10 | 0.10 | 0.03 | 0.03 | 0.25 | 0.02 | 0.03 | 0.04 | 0.05 | 0.05 |
| Fatty acid composition (%) | C14:0 | 5.44 | 7.81 | 3.50 | 3.00 | 3.79 | 2.57 | 5.85 | 0.00 | 0.00 | 0.95 |
| | C16:0 | 15.58 | 18.20 | 20.71 | 19.41 | 24.46 | 14.06 | 7.99 | 3.94 | 10.86 | 39.70 |
| | C18:0 | 1.15 | 3.54 | 6.10 | 5.18 | 6.27 | 3.09 | 1.87 | 1.72 | 3.53 | 4.34 |
| | C18:1 | 19.74 | 14.52 | 13.64 | 19.75 | 17.37 | 20.70 | 11.50 | 62.59 | 24.97 | 42.57 |
| | C18:2 | 1.48 | 3.74 | 2.05 | 1.72 | 1.96 | 1.76 | 6.83 | 19.55 | 53.33 | 11.54 |
| | C18:3 | 0.00 | 1.88 | 1.87 | 1.95 | 0.61 | 1.75 | 1.61 | 9.59 | 6.14 | 0.21 |
| | C20:0 | 0.00 | 0.00 | 0.56 | 0.23 | 0.34 | 0.00 | 0.47 | 0.56 | 0.32 | 0.37 |
| | C20:1 | 0.00 | 0.00 | 0.18 | 0.60 | 0.52 | 0.45 | 0.77 | 1.21 | 0.20 | 0.14 |
| | C22:0 | 0.30 | 0.81 | 0.42 | 0.97 | 0.00 | 0.76 | 0.17 | 0.28 | 0.41 | 0.06 |
| | C22:1 | 0.29 | 0.47 | 2.30 | 1.84 | 1.67 | 2.10 | 1.14 | 0.13 | 0.00 | 0.04 |
| | C24:0 | 0.20 | 0.41 | 0.29 | 0.67 | 0.24 | 0.40 | 0.65 | 0.19 | 0.15 | 0.07 |
| | C20:5 (EPA) | 0.80 | 19.70 | 5.70 | 6.80 | 8.00 | 8.00 | 28.60 | 0.00 | 0.00 | 0.00 |
| | C22:6 (DHA) | 38.10 | 12.30 | 29.00 | 25.10 | 30.00 | 29.90 | 12.20 | 0.00 | 0.00 | 0.00 |
| | others | 16.91 | 16.62 | 13.68 | 12.78 | 4.77 | 14.47 | 20.35 | 0.24 | 0.08 | 0.00 |
| 3-MCPDE [ppm] | | 0.45 | 0.74 | 0.70 | 2.06 | 0.30 | 4.86 | 4.81 | 0.25 | 0.27 | 5.00 |
| Chlorine [ppm] | | 0.60 | 27.00 | 82.00 | 52.00 | 0.50 | 67.00 | 50.00 | 0.50 | 0.50 | 0.50 |

| | | | | | | | | | | | |
|---|---|---|---|---|---|---|---|---|---|---|---|
| MAG: Monoacylglycerol DAG: Diacylglycerol TAG: Triacylglycerol FFA: Free fatty acid | | | | | | | | | | | |

### Examples 1 to 15 and Comparative Examples 1 to 7

### (Preparation of fat or oil compositions)

Raw material fats or oils were blended at ratios shown in Tables 2-1 and 2-2, and the mixtures were stirred under a nitrogen atmosphere for 0.5 hour, thus preparing fat or oil compositions.

### (Evaluation of taste and flavor at time of heating)

20 g of each of the fat or oil compositions prepared in Examples and Comparative Examples were placed in 50-mL screw vials, and the vials were sealed and stored under shade at 60 °C for 3 days, thereby obtaining stored products. The resultant stored products were heated to 40°C and evaluated for their taste and flavor. Nine panelists evaluated the taste and flavor in accordance with the following criteria, and mean values thereof were determined as scores. Tables 2-1 and 2-2 show the results.

### (Taste and flavor of stored product at time of heating)

5: No fishy and unpleasant odor and very good taste and flavor
4: Almost no fishy and unpleasant odor and good taste and flavor
3: Slight fishy and unpleasant odor
2: Distinct fishy and unpleasant odor and bad taste and flavor
1: Strong fishy and unpleasant odor and very bad taste and flavor

**[Table 2-1]**

| | | Example | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Fat or oil a | | 3.9 | - | - | - | - | - | - | - | 12.9 | - | - | - | 23.1 | - | - |
| Fat or oil b | | - | 4.7 | - | - | - | - | - | 4.7 | - | 15.6 | - | - | - | 28.1 | - |
| Fat or oil c | | - | - | 4.3 | - | - | - | - | - | - | - | 14.4 | - | - | - | 25.9 |
| Fat or oil d | | - | - | - | 4.7 | - | - | - | - | - | - | - | 15.7 | - | - | - |
| Fat or oil e | | - | - | - | - | 3.9 | - | - | - | - | - | - | - | - | - | - |
| Fat or oil f | | - | - | - | - | - | 4.0 | - | - | - | - | - | - | - | - | - |
| Fat or oil g | | - | - | - | - | - | - | 3.7 | - | - | - | - | - | - | - | - |
| Fat or oil 1 | | 96.1 | 95.3 | 95.7 | 95.3 | 96.1 | 96.0 | 96.3 | - | 87.1 | 84.4 | 85.6 | 84.3 | 76.9 | 71.9 | 74.1 |
| Fat or oil 2 | | - | - | - | - | - | - | - | 95.3 | - | - | - | - | - | - | - |
| Fat or oil 3 | | - | - | - | - | - | - | - | - | - | - | - | - | - | - | - |
| | | | | | | | | | | | | | | | | |
| Ratio in fat or oil composition | | | | | | | | | | | | | | | | |
| C20:5+C22:6 | [%] | 1.5 | 1.5 | 1.5 | 1.5 | 1.5 | 1.5 | 1.5 | 1.5 | 5 | 5 | 5 | 5 | 9 | 9 | 9 |
| 3-MCPDE | [ppm] | 0.26 | 0.27 | 0.27 | 0.34 | 0.25 | 0.43 | 0.42 | 0.29 | 0.28 | 0.33 | 0.31 | 0.53 | 0.3 | 0.39 | 0.37 |
| Chlorine | [ppm] | 1 | 2 | 4 | 3 | 1 | 3 | 2 | 2 | 1 | 5 | 12 | 9 | 1 | 8 | 22 |
| 3-MCPDE/(C20 :5+C22:6) | [×10⁻⁴] | 0.17 | 0.18 | 0.18 | 0.23 | 0.17 | 0.29 | 0.28 | 0.19 | 0.06 | 0.07 | 0.06 | 0.11 | 0.03 | 0.04 | 0.04 |
| | | | | | | | | | | | | | | | | |
| Taste and flavor of stored product at time of heating | | 5 | 5 | 5 | 4 | 5 | 3.5 | 3.5 | 5 | 5 | 5 | 4 | 4 | 4 | 4 | 3.5 |

**[Table 2-2]**

| | | Comparative Example | | | | | | |
|---|---|---|---|---|---|---|---|---|
| | | 1 | 2 | 3 | 4 | 5 | 6 | 7 |
| Fat or oil a | | - | - | - | - | 51.4 | - | - |
| Fat or oil b | | 4.7 | 4.7 | - | - | - | 62.5 | - |
| Fat or oil c | | - | - | - | 43.2 | - | - | 57.6 |
| Fat or oil d | | - | - | 28.2 | - | - | - | - |
| Fat or oil e | | - | - | - | - | - | - | - |
| Fat or oil f | | - | - | - | - | - | - | - |
| Fat or oil g | | - | - | - | - | - | - | - |
| Fat or oil 1 | | - | - | 71.8 | 56.8 | 48.6 | 37.5 | 42.4 |
| Fat or oil 2 | | 75.3 | - | - | - | - | - | - |
| Fat or oil 3 | | 20.0 | 95.3 | - | - | - | - | - |
| | | | | | | | | |
| Ratio in fat or oil composition | | | | | | | | |
| C20:5+C22:6 | [%] | 1.5 | 1.5 | 9 | 15 | 20 | 20 | 20 |
| 3-MCPDE | [ppm] | 2 | 4.8 | 0.76 | 0.44 | 0.35 | 0.56 | 1.29 |
| Chlorine | [ppm] | 2 | 2 | 15 | 36 | 1 | 17 | 47 |
| 3-MCPDE/(C20:5+ C22:6) | [×10⁻⁴] | 1.33 | 3.20 | 0.08 | 0.03 | 0.02 | 0.03 | 0.06 |
| | | | | | | | | |
| Taste and flavor of stored product at time of heating | | 3 | 3 | 3 | 2 | 2 | 2 | 1 |

As shown in Tables 2-1 and 2-2, in the fat or oil compositions of the present invention, degradation of their taste and flavor was suppressed at the time of heating after storage.

## Claims

1. An fat or oil composition, comprising a fat or oil in which a total content of eicosapentaenoic acid and docosahexaenoic acid in total constituent fatty acids thereof is from 0.05 to 15 mass%, and having a content of 3-MCPDE of 0.7 ppm or less and a content of chlorine of 30 ppm or less.

2. The fat or oil composition according to claim 1, wherein a mass ratio of the content of 3-MCPDE in the fat or oil composition to a total content, in the fat or oil composition, of eicosapentaenoic acid and docosahexaenoic acid in the total constituent fatty acids of the fat or oil, [3-MCPDE/(C20:5+C22:6)], is 0.3×10⁻⁴ or less.

3. The fat or oil composition according to claim 1 or 2, wherein the fat or oil composition is obtained by mixing one or two or more of fats or oils selected from the group consisting of fish oil and algal oil with a fat or oil substantially free from eicosapentaenoic acid and docosahexaenoic acid.

4. The fat or oil composition according to claim 3, wherein the one or two or more of fats or oils selected from the group consisting of fish oil and algal oil have a content of 3-MCPDE of 4 ppm or less and a content of chlorine of 90 ppm or less.

5. The fat or oil composition according to any one of claims 1 to 4, wherein the total content of eicosapentaenoic acid and docosahexaenoic acid in the total constituent fatty acids of the fat or oil is from 0.3 to 12 mass%.

6. The fat or oil composition according to any one of claims 1 to 4, wherein the total content of eicosapentaenoic acid and docosahexaenoic acid in the total constituent fatty acids of the fat or oil is from 1 to 9 mass%.

7. The fat or oil composition according to any one of claims 1 to 4, wherein the total content of eicosapentaenoic acid and docosahexaenoic acid in the total constituent fatty acids of the fat or oil is from 1.5 to 5 mass%.

8. The fat or oil composition according to any one of claims 1 to 7, wherein the content of 3-MCPDE is from 0 to 0.55 ppm.

9. The fat or oil composition according to any one of claims 1 to 7, wherein the content of 3-MCPDE is from 0.01 to 0.4 ppm.

10. The fat or oil composition according to any one of claims 1 to 7, wherein the content of 3-MCPDE is from 0.1 to 0.3 ppm.

11. The fat or oil composition according to any one of claims 1 to 10, wherein unsaturated fatty acids account for from 60 to 100 mass% of the constituent fatty acids of the fat or oil other than eicosapentaenoic acid and docosahexaenoic acid.

12. The fat or oil composition according to any one of claims 1 to 11, wherein a content of saturated fatty acids in the total constituent fatty acids of the fat or oil is 40 mass% or less.

13. The fat or oil composition according to any one of claims 1 to 12, wherein a content of a free fatty acid or a salt thereof in the fat or oil composition is 5 mass% or less.

14. The fat or oil composition according to any one of claims 1 to 13, wherein a content of a triacylglycerol in the fat or oil is from 15 to 100 mass%.

15. The fat or oil composition according to any one of claims 1 to 13, wherein a content of a diacylglycerol in the fat or oil is from 0 to 85 mass%.

## Patentansprüche

1. Fett- oder Öl-Zusammensetzung, enthaltend ein Fett oder Öl, worin ein Gesamtgehalt von Eicosapentaensäure und Docosahexaensäure in den gesamten BestandteilsFettsäuren davon von 0,05 bis 15 mass% ist und mit einem Gehalt von 3-MCPDE von 0,7 ppm oder weniger und einem Gehalt von Chlor von 30 ppm oder weniger.

2. Fett- oder Öl-Zusammensetzung nach Anspruch 1, worin ein Massenverhältnis des Gehalt von 3-MCPDE in der Fett- oder Öl-Zusammensetzung zu einem Gesamtgehalt Eicosapentaensäure und Docosahexaensäure in der Fett- oder Öl-Zusammensetzung in den gesamten Bestandteilsfettsäuren des Fett oder Öls [3-MCPDE/(C20:5+C22:6)] 0,3 x 10⁻⁴ oder weniger ist.

3. Fett- oder Öl-Zusammensetzung nach Anspruch 1 oder 2, worin die Fett- oder Öl-Zusammensetzung erhalten ist durch Mischen von einer oder zwei oder mehreren von Fetten oder Ölen, ausgewählt aus der Gruppe bestehend aus Fischöl und Algenöl mit einem Fett oder Öl, das im wesentlichen frei ist von Eicosapentaensäure und Docosahexaensäure.

4. Fett- oder Öl-Zusammensetzung nach Anspruch 3, worin die eine oder zwei oder mehreren von Fetten und Ölen, ausgewählt aus der Gruppe bestehend aus Fischöl und Algenöl einen Gehalt von 3-MCPDE von 4 ppm oder weniger und einen Gehalt von Chlor von 90 ppm oder weniger haben.

5. Fett- oder Öl-Zusammensetzung nach einem der Ansprüche 1 bis 4, worin der Gesamtgehalt von Eicosapentaensäure und Docosahexaensäure in den gesamten Bestandteilsfettsäuren des Fett oder Öls von 0,3 bis 12 mass% ist.

6. Fett- oder Öl-Zusammensetzung nach einem der Ansprüche 1 bis 4, worin der Gesamtgehalt von Eicosapentaensäure und Docosahexaensäure in den gesamten Bestandteilsfettsäuren des Fett oder Öls von 1 bis 9 mass% ist.

7. Fett- oder Öl-Zusammensetzung nach einem der Ansprüche 1 bis 4, worin der Gesamtgehalt von Eicosapentaensäure und Docosahexaensäure in den gesamten Bestandteilsfettsäuren des Fett oder Öls von 1,5 bis 5 mass% ist.

8. Fett- oder Öl-Zusammensetzung nach einem der Ansprüche 1 bis 7, worin der Gehalt von 3-MCPDE von 0 bis 0,55 ppm ist.

9. Fett- oder Öl-Zusammensetzung nach einem der Ansprüche 1 bis 7, worin der Gehalt von 3-MCPDE von 0,01 bis 0,4 ppm ist.

10. Fett- oder Öl-Zusammensetzung nach einem der Ansprüche 1 bis 7, worin der Gehalt von 3-MCPDE von 0,1 bis 0,3 ppm ist.

11. Fett- oder Öl-Zusammensetzung nach einem der Ansprüche 1 bis 10, worin andere ungesättigte Fettsäuren als Eicosapentaensäure und Docosahexaensäure 60 bis 100 mass% der Bestandteilsfettsäuren des Fetts oder Öls ausmachen.

12. Fett- oder Öl-Zusammensetzung nach einem der Ansprüche 1 bis 11, worin ein Gehalt von gesättigten Fettsäuren in den gesamten Bestandteilsfettsäuren des Fetts oder Öls 40 mass% oder weniger ist.

13. Fett- oder Öl-Zusammensetzung nach einem der Ansprüche 1 bis 12, worin ein Gehalt einer freien Fettsäure oder eines Salzes davon in der Fett- oder Öl-Zusammensetzung 5 mass% oder weniger ist.

14. Fett- oder Öl-Zusammensetzung nach einem der Ansprüche 1 bis 13, worin ein Gehalt von Triacylglycerin in dem Fett oder Öl von 15 bis 100 mass% ist.

15. Fett- oder Öl-Zusammensetzung nach einem der Ansprüche 1 bis 13, worin ein Gehalt eines Diacylglycerins in dem Fett oder Öl von 0 bis 85 mass% ist.

## Revendications

1. Composition de matière grasse ou d'huile, comprenant une matière grasse ou une huile dans laquelle une teneur totale en acide eicosapentaénoïque et en acide docosahexaénoïque dans les acides gras constitutifs totaux de celle-ci est de 0,05 à 15 % en masse, et ayant une teneur en 3-MCPDE de 0,7 ppm ou moins et une teneur en chlore de 30 ppm ou moins.

2. Composition de matière grasse ou d'huile selon la revendication 1, dans laquelle un rapport massique entre la teneur de 3-MCPDE dans la composition de matière grasse ou d'huile et la teneur totale, dans la composition de matière grasse ou d'huile, d'acide eicosapentaénoïque et d'acide docosahexaénoïque dans les acides gras constitutifs totaux de la matière grasse ou de l'huile, [3-MCPDE/(C20 : 5 + C22 : 6)], est de 0,3x10⁻⁴ ou moins.

3. Composition de matière grasse ou d'huile selon la revendication 1 ou 2, dans laquelle la composition de matière grasse ou d'huile est obtenue en mélangeant une ou deux matière(s) grasse(s) ou huile(s) ou plus choisie(s) dans le groupe constitué par l'huile de poisson et l'huile d'algue avec une matière grasse ou une huile pratiquement exempte d'acide eicosapentaénoïque et d'acide docosahexaénoïque.

4. Composition de matière grasse ou d'huile selon la revendication 3, dans laquelle les une ou deux matière(s) grasse(s) ou huile(s) ou plus choisie(s) dans le groupe constitué par l'huile de poisson et l'huile d'algue a (ont) une teneur en 3-MCPDE de 4 ppm ou moins et une teneur en chlore de 90 ppm ou moins.

5. Composition de matière grasse ou d'huile selon l'une quelconque des revendications 1 à 4, dans laquelle la teneur totale en acide eicosapentaénoïque et en acide docosahexaénoïque dans les acides gras constitutifs totaux de la matière grasse ou de l'huile est de 0,3 à 12 % en masse.

6. Composition de matière grasse ou d'huile selon l'une quelconque des revendications 1 à 4, dans laquelle la teneur totale en acide eicosapentaénoïque et en acide docosahexaénoïque dans les acides gras constitutifs totaux de la matière grasse ou de l'huile est de 1 à 9 % en masse.

7. Composition de matière grasse ou d'huile selon l'une quelconque des revendications 1 à 4, dans laquelle la teneur totale en acide eicosapentaénoïque et en acide docosahexaénoïque dans les acides gras constitutifs totaux de la matière grasse ou de l'huile est de 1,5 à 5 % en masse.

8. Composition de matière grasse ou d'huile selon l'une quelconque des revendications 1 à 7, dans laquelle la teneur en 3-MCPDE est de 0 à 0,55 ppm.

9. Composition de matière grasse ou d'huile selon l'une quelconque des revendications 1 à 7, dans laquelle la teneur en 3-MCPDE est de 0,01 à 0,4 ppm.

10. Composition de matière grasse ou d'huile selon l'une quelconque des revendications 1 à 7, dans laquelle la teneur en 3-MCPDE est de 0,1 à 0,3 ppm.

11. Composition de matière grasse ou d'huile selon l'une quelconque des revendications 1 à 10, dans laquelle les acides gras insaturés comptent pour 60 à 100 % en masse des acides gras constitutifs de la matière grasse ou de l'huile autres que l'acide eicosapentaénoïque et l'acide docosahexaénoïque.

12. Composition de matière grasse ou d'huile selon l'une quelconque des revendications 1 à 11, dans laquelle une teneur en acides gras insaturés dans les acides gras constitutifs totaux de la matière grasse ou de l'huile est de 40 % ou moins en masse.

13. Composition de matière grasse ou d'huile selon l'une quelconque des revendications 1 à 12, dans laquelle une teneur en un acide gras libre ou un sel de celui-ci dans la composition de matière grasse ou d'huile est de 5 % ou moins en masse.

14. Composition de matière grasse ou d'huile selon l'une quelconque des revendications 1 à 13, dans laquelle la teneur en triacylglycérol dans la matière grasse ou l'huile est de 15 à 100 % en masse.

15. Composition de matière grasse ou d'huile selon l'une quelconque des revendications 1 à 13, dans laquelle une teneur en un diacylglycérol dans la matière grasse ou l'huile est de 0 à 85 % en masse.
